# EUROPÄISCHE PATENTSCHRIFT

(11) **EP 2 382 127 B1**
(45) Veröffentlichungstag und Bekanntmachung des Hinweises auf die Patenterteilung: **20.04.2016**
(21) Anmeldenummer: 10700402.0
(22) Anmeldetag: 12.01.2010
(51) Int. Cl.: B64D 11/00, B64D 11/06

(54) **SICHTSCHUTZ FÜR EINE PASSAGIERKABINE**
SCREEN FOR A PASSENGER CABIN
PROTECTION VISUELLE POUR CABINE PASSAGERS

(30) Priorität: 23.01.2009 DE 102009005905; 23.01.2009 US 146784 P
(43) Veröffentlichungstag der Anmeldung: 02.11.2011
(73) Patentinhaber: Airbus Operations GmbH, 21129 Hamburg (DE)
(72) Erfinder: BREUER, Matthias, 22147 Hamburg (DE); MOSLER, Michael, 31830 Plaisance du Touch (FR)
(74) Vertreter: Kopf Westenberger Wachenhausen Patentanwälte PartG mbB
(86) Internationale Anmeldenummer: PCT/EP2010/050240
(87) Internationale Veröffentlichungsnummer: WO 2010/084048

(56) Entgegenhaltungen:
- EP-A1- 0 547 362
- EP-A1- 0 708 018
- EP-A2- 0 825 060
- WO-A1-93/01088
- FR-A1- 2 763 038
- FR-A1- 2 893 002

## Beschreibung

### BEZUG AUF ZUGEHÖRIGE ANMELDUNGEN

Die vorliegende Anmeldung beansprucht die Priorität der US Provisional Patentanmeldung Nr. 61/146,784, eingereicht am 23. Januar 2009 und der deutschen Patentanmeldung Nr. 10 2009 005 905.9, eingereicht am 23. Januar 2009.

### TECHNISCHES GEBIET

Die Erfindung betrifft eine Einrichtung zur Abgrenzung oder Separierung einer Zone in einer Passagierkabine eines Transportmittels, ein Flugzeug und ein Verfahren zur Montage und Betätigung einer Einrichtung in einer Passagierkabine. Unter dem Begriff Compartment ist in der vorliegenden Erfindung ein im Wesentlichen abgeschlossenes Abteil oder eine abgegrenzte Zone in einer Passagierkabine zu verstehen.

### HINTERGRUND DER ERFINDUNG

Zur Darstellung einer abgegrenzten Zone in Passagierkabinen sind beispielsweise Cabin Crew Rest Compartments oder Cabin Crew Rest Einrichtungen bekannt, die einen an einer Vorhangschiene bzw. Curtain Paneln geführten Vorhang einschließen. Diese ausschließlich an festgelegten Positionen verbaubare Maßnahme ist unflexibel, erfordert bei einer Nichtbenutzung einen hohen Stauraum und besitzt aufgrund der Abtrennteile ein relativ hohes Gewicht. Weiterhin ist es bekannt Partitions im Center- und Lateralbereich von Passagierkabinen anzuordnen, zur Schaffung von unterschiedlichen Klassen innerhalb der Kabine. Dazu wird zwischen Underbin-Partitions (verlaufen vom Hatrackboden bis zum Kabinenboden) und den Fullheight-Partitions unterschieden, die sich zwischen der Kabinendecke und dem Boden erstrecken. Derartige Partitions werden bevorzugt in einer Wabenstruktur- Bauweise (Honeycomb) aus Prepreg ausgeführt und weisen außenseitig ein Aluminium-Kantenschutzprofil auf. Diese ein relativ hohes Gewicht aufweisende Bauweise besitzt eine große Steifigkeit, die für ein ausschließlich als Sicht- oder Trennschutz konzipiertes Element nicht erforderlich ist. Außerdem können diese Partitions weder flexibel an beliebigen Positionen der Passagierkabine montiert noch zusammengeklappt leicht verstaut werden. Zur Abgrenzung eines VIP-Bereichs in einer Passagierkabine ist weiterhin bekannt, einen stirnseitigen Bereich der abzutrennenden Zone ähnlich dem Crew Rest Compartment über in einem Curtain Rail Panel geführte Vorhänge abzudecken, in Verbindung mit einer parallel zu einem Gang verlaufenden Vorhangschiene. Auch dieses System ist aufgrund der festgelegten Position unflexibel, erfordert bei Nichtbenutzung einen großen Stauraum und besitzt ein durch die Abtrennelemente verursachtes hohes Gewicht.

Derartige Einrichtungen werden benutzt, um im Bereich einer Passagierkabine eine Aufteilung in unterschiedliche Reiseklassen vorzunehmen. Um eine wirtschaftlich günstige Auslastung des Transportmittels sicherzustellen, wird eine Anpassung der jeweiligen Reiseklasse an die benötigten Sitzplätze angestrebt. Aus der DE 38 02 331 A ist eine Vorrichtung zur Unterteilung einer Flugzeugkabine bekannt, die positionsveränderlich eingesetzt werden kann. Diese als Sicherheitseinrichtung ausgeführte Unterteilung dient insbesondere zur Abgrenzung eines Brandherdes in einer Flugzeugkabine. Weiterhin ist aus dem Stand der Technik, der DE 10 2005 003 154 A1, ein Raumzellensystem bekannt, welches sich zwischen einem Boden und einer Decke der Passagierkabine erstreckt und zwischen diesen verspannt ist. Die Größe und das Gewicht dieses Raumzellensystems stehen einer schnellen Montage entgegen. Aus der WO 93/01088 ist eine Trennwand bekannt, die aus schwenkbar verbundenen Plattenabschnitten ausgebildet ist.

### ZUSAMMENFASSUNG DER ERFINDUNG

Der Erfindung liegt die Aufgabe zu Grunde, mit einem Minimum an Gewicht und Raumbedarf kostengünstig eine flexible Abgrenzung in einer Passagierkabine von einem Transportmittel bereitzustellen.

Die zuvor genannte Aufgabenstellung wird gemäß Anspruch 1 durch eine Einrichtung gelöst, die zur Schaffung einer individuell abgegrenzten Zone der Passagierkabine ein modulares Kabinenelement umfasst. Das an ortsfesten Führungsschienen des Passagiersitzes über Schnellverschlüsse positionsveränderlich befestigte modulare Kabinenelement schließt als Trennwand ein einstellbares Sichtschutzrollo ein. Zur Realisierung einer individuell festgelegten Größe des abgegrenzten Kabinenbereichs kann das modulare Kabinenelement und folglich das zugehörige, einen variablen Trennwandersatz-Sichtschutz bildende Sichtschutzrollo bedarfsgerecht, gerade oder auch schrägverlaufend positionsveränderlich an den Führungsschienen befestigt werden. Das erfindungsgemäße, weitestgehend die Funktion eines Rolladens entsprechende Konzept sieht vor, dass das ausziehbare, auch als Trennelement zu bezeichnende Sichtschutzrollo sich zwischen dem modularen Kabinenelement und einer Deckenstruktur der Passagierkabine erstreckt und in der Funktionsstellung im Bereich der Kabinendecke fixiert ist. Die Flexibilität unterstreichend, kann das Sichtschutzrollo auch in Zwischenstellungen stufenlos arretiert werden. Aufgrund des variabel an den Führungsschienen der Passagiersitze befestigten modularen Kabinenelements sowie des einstellbaren Sichtschutzrollos kann die Größe des abgeschirmten Bereichs der Passagierkabine vorteilhaft individuell angepasst oder festgelegt werden.

Das Sichtschutzrollo kann sich in einer Funktionsstellung zwischen dem modularen Kabinenelement und der Unterseite des Hatracks, dem PSU-Panel, dem Deckenverlauf und im lateralen Bereich zusätzlich dem Sidewall-Lining erstrecken.

Die Erfindung erweitert damit die Gestaltungsmöglichkeit der Passagierkabine, insbesondere für eine Vielfachnutzung und bildet einen weiteren Baustein zur Darstellung eines Cabin-Flex-Conceptes, wobei über eine realisierbare zweckmäßige Form- und Farbgebung des modularen Kabinenelements gleichzeitig eine positive optische Wirkung erzielbar ist. Außerdem verbessert das erfindungsgemäße, einen Trennwandersatz-Sichtschutz bildende Sichtschutzrollo das Komfort- oder Sicherheitskonzept und ermöglicht kurzfristig eine bedarfsgerechte Separierung in unterschiedliche Kabinenbereiche, beispielsweise zur Schaffung einer VIP-Area. Weiterhin kann mit Hilfe der Erfindung eine Emergency-Area eingerichtet werden, um in einem Notfall eine medizinische Erstversorgung abgeschirmt durchführen zu können.

Das Sichtschutzrollo kann für eine abgegrenzte Zone sowohl für einen gangseitigen geraden Verlauf als auch in einem lateralen Bereich eingesetzt werden. Die kompakte Bauweise des erfindungsgemäßen Sichtschutzkonzeptes ermöglicht mit einem Minimum an Gewicht und Raumbedarf einen wirksamen, alle Anforderungen an eine wirksame Separierung erfüllenden Sichtschutz zu realisieren. Da das Sichtschutzrollo bei Nichtgebrauch in dem modularen Kabinenelement aufgenommen ist, stellt sich weiterhin ein Stauraumvorteil gegenüber herkömmlichen Systemen ein. Das erfindungsgemäße, durch einen rationellen Fertigungsablauf herstellbare Konzept, die einfache Montage und die Möglichkeit der kurzzeitigen Anpassung der Passagierkabine an die jeweilige Verwendungskonfiguration, führt insgesamt zu einer Kosteneinsparung. Die Erfindung ermöglicht ohne Beeinträchtigung des optischen Erscheinungsbildes der Passagierkabine die Darstellung eines abgegrenzten Bereichs beziehungsweise eines Compartments. Dabei ist von Vorteil, dass Gleit-, Kratz- oder Schmierstoffspuren an sichtbaren Ausstattungsteilen der Passagierkabine durch die Installation des erfindungsgemäßen Sichtschutzrollos unterbleiben, wodurch der Aufwand für Reinigung und Wartung der Passagierkabine folglich gesenkt werden kann. Weiterhin wird vorteilhaft sichergestellt, dass ein Durchgangsquerschnitt in der Passagierkabine, insbesondere im Kopfbereich des Ganges durch das erfindungsgemäße Sichtschutzkonzept nicht eingeschränkt ist und für den Passagier potentielle Unfallgefahren vermieden werden.

Bevorzugte vorteilhafte Weiterbildungen, die dem Zweck dienen, bei einem möglichst einfachen Aufbau ein Maximum an Flexibilität zu erreichen, sind in den abhängigen Ansprüchen angegeben.

Ein wichtiger Aspekt der Erfindung ist darin zu sehen, dass die Einrichtung mehrere bzw. eine beliebige Anordnung von modularen Kabinenelementen mit integriertem Sichtschutzrollo einschließt, zur Darstellung eines als Compartement für Passagiere, eines VIP-Bereichs oder als Cabin Crew Rest nutzbaren abgetrennten Kabinenbereichs. Dadurch kann kurzfristig eine den aktuell vorliegenden Platzanforderungen innerhalb der Passagierkabine angepasste individuelle Abtrennung von Passagiersitzen, Passagiersitzgruppen oder Kabinenbereichen erreicht werden. Die Variabilität unterstreichend, können den Bedürfnissen entsprechend die modularen Kabinenelemente auf einen Passagiersitz oder eine Passagiersitzgruppe bezogen seitlich, centerartig und lateral angeordnet werden. Die Stabilität der einzelnen Sichtschutzrollos verbessernd bietet es sich an, einzelne Sektionen von Sichtschutzrollos über zugeordnete Führungselemente zu verbinden oder zu stabilisieren. Weiterhin schließt die Erfindung seitliche Zusatzteile ein, die mit einem an der Führungs- oder Sitzschiene des Passagiersitzes befestigten Front-Sichtschutzrollos beispielsweise mittels einer Flanschverbindung befestigt werden können, um einen seitlichen Blickschutz zu realisieren.

Ein weiterer wichtiger Aspekt der Erfindung sieht vor, die Kabine in unterschiedliche Passagierbereiche aufzuteilen. Durch die Installation modularer Kabinenelemente einschließlich zugehöriger Sichtschutzrollos in unterschiedlichen Zonen der Passagierkabine können voneinander getrennte Reiseklassen für Passagiere realisiert werden.

Ein weiterer Vorteil der erfindungsgemäßen Lösung liegt darin, dass eine Betätigung oder Installation des modularen Kabinenelements weitestgehend werkzeuglos, manuell durch das Bedienungspersonal erfolgen kann. Dazu schließt das Sichtschutzrollo bevorzugt einen Handgriff ein, über den das Sichtschutzrollo in die Funktionsstellung gezogen werden kann. Alternativ dazu bietet sich eine automatisierte, servounterstützte Betätigung an, bei der beispielsweise über Knopfdruck ein in dem modularen Kabinenelement integrierter Stellmotor in Verbindung mit einem Stellglied zur Verstellung des Sichtschutzrollos aktiviert werden kann.

Unabhängig von der Betätigungsart kann das Sichtschutzrollo in der ausgezogenen Stellung, der Funktionsstellung, an einer Deckenstruktur der Passagierkabine mit zumindest einem Verriegelungsmechanismus fixiert werden. Bevorzugt sind dazu als Befestigungsnasen ausgebildete Halteelemente vorgesehen, die beispielsweise in Zwischenräumen der PSU-Verkleidung oder im Bereich der Hatracks angeordnet sind.

Ein weiterer wichtiger Aspekt der Erfindung berücksichtigt außerdem unterschiedlich ausgeführte Sichtschutzrollos. Bevorzugt eignet sich ein als Rolladen gestaltetes Sichtschutzrollo, das in der Nichtfunktionsstellung platzsparend in einem Behältnis des modularen Kabinenelementes aufgewickelt untergebracht ist. Alternativ dazu kann das Sichtschutzrollo gemäß der Erfindung als Jalousie ausgebildet werden. Die Erfindung schließt außerdem weitere geeignete falt- oder aufrollbare Einrichtungen ein.

Gemäß der Erfindung ist das Sichtschutzrollo bevorzugt aus Segeltuch, Leinen, einer Kunststofffolie, einem Gummi oder einem anderen geeigneten, dauerfesten und aufrollbaren Material hergestellt. Die Materialauswahl ist dabei auf schwerentflammbare, insbesondere die Kriterien der Brandklasse B1 (DIN 4102) erfüllende Materialen beschränkt.

Ein wichtiger Aspekt der Erfindung ist in einer einfachen und schnellen Montage bzw. Installation des modularen Kabinenelementes zu sehen. Um dieses Erfordernis zu erfüllen, sind die Kabinenelemente über Schnellverschlüsse an den Führungsschienen der Passagiersitze arretiert. Weiterhin zeichnet sich das modulare Kabinenelement durch eine kompakte, bauraumoptimierte Bauweise aus, das beispielsweise bis auf einen Durchtritt für das Sichtschutzrollo bevorzugt ein geschlossenes Hohlkammerprofil bildet, in dem das Sichtschutzrollo in der Nichtfunktionsstellung insbesondere rolladenähnlich auf einer Trommel oder Walze aufgewickelt ist. Das Hohlkammerprofil kann weiterhin zur Aufnahme eines Betätigungsorgans wie Stellmotor und Stellglied oder für Zubehörteile genutzt werden.

Gemäß der Erfindung ist in dem abgetrennten Kabinenbereich als Sicherheitseinrichtung in zumindest einem Sichtschutzrollo ein Zugang integriert. Der Passagier kann über diese ergänzende, türähnliche Öffnung im Notfall die abgeschirmte Zone verlassen. Dazu bietet es sich an, ein faltbares, um eine vertikale Achse schwenkbares Element in dem Sichtschutzrollo einzubringen, wobei die im Normalfall abgedeckte Öffnung eine optische Kennung aufweist. Als weiteres Sicherheitselement kann der separierte Kabinenbereich erfindungsgemäß außenseitig ein Anzeigepanel einschließen, über das dem Bedienungspersonal, der Crew, der Nutzungs- bzw. der Belegungsumfang angezeigt wird.

Ein wichtiger Aspekt der Erfindung ist darin zu sehen, dass die erfindungsgemäße Einrichtung als ein Nachrüstsatz ausgeführt werden kann. Ohne Anpassungsarbeiten kann das modulare Kabinenelement vorteilhaft in eine bestehende Passagierkabine integriert werden. Aufgrund der Befestigung des modularen Kabinenelements über Schnellverschlüsse an den Führungsschienen der Passagiersitze kann diese Nachrüstung kurzfristig erfolgen.

Gemäß der Erfindung kann die Einrichtung in einem Flugzeug und anderen Transportmitteln eingesetzt werden. Dabei ermöglicht das erfindungsgemäße Konzept unter anderem, dass während des Fluges bei Bedarf ein abgetrennter Raum, eine separate Zone in der Passagierkabine geschaffen werden kann, um beispielsweise in einem Notfall einen Passagier in einer von den übrigen Passagieren abgegrenzten Zone behandeln zu können.

Gemäß einem weiteren Ausführungsbeispiel der Erfindung ist ein Verfahren zur Montage und Betätigung einer Einrichtung zur Darstellung einer abgegrenzten Zone in einer Passagierkabine eines Transportmittels vorgesehen. Diese Einrichtung unzfasst zumindest einen an ortsfesten Führungsschienen befestigten, verstellbaren Passagiersitz sowie zumindest ein an den Führungsschienen positionsveränderliches modulares Kabinenelement mit integriertem Sichtschutzrollo. Das Verfahren schließt folgende Schritte ein. Zur Darstellung einer unterteilten Passagierkabine wird zunächst das modulare Kabinenelement über Schnellverschlüsse an den Führungsschienen des Passagiersitzes positionsveränderlich montiert. Anschließend wird das in dem modularen Kabinenelement integrierte, ausziehbare Sichtschutzrollo eingestellt, wobei sich dieser Sichtschutz in einer Funktionsstellung zwischen dem modularen Kabinenelement und einer Deckenstruktur erstreckt. Als letzter Verfahrensschritt erfolgt eine Fixierung des Sichtschutzrollos an einer Deckenstruktur der Passagierkabine.

### KURZE BESCHREIBUNG DER ZEICHNUNGEN

Im Folgenden wird die Erfindung anhand von Ausführungsbeispielen unter Bezugnahme auf neun Zeichnungen näher erläutert.
- Fig. 1: zeigt in einer Seitenansicht einen Ausschnitt aus einer bekannten Passagiersitzanordnung eines Flugzeugs mit integriertem Curtain Crew Rest Compartment;
- Fig. 2: zeigt einen bekannten gangseitig abgetrennten Bereich in einer Passagierkabine eines Flugzeugs;
- Fig. 3: zeigt ein erfindungsgemäßes, den Sitzschienen des Passagiersitzes zugeordnetes modulares Kabinenelement;
- Fig. 4: zeigt das modulare Kabinenelement gemäß Fig. 3 in einer schräg verlaufenden Anordnung;
- Fig. 5: zeigt eine Ausschnittsvergrößerung des modularen Kabinenelements inkl. der Vorrichtung zur Befestigung in der Sitzschiene ;
- Fig. 6: zeigt als Sichtschutz teilweise ausgezogene Sichtschutzrollos im lateralen Bereich und im Center Bereich;
- Fig. 7: zeigt ein seitliches ausgezogenes Sichtschutzrollo in der Funktionsstellung (komplett ausgezogen und am Hatrack, in der Griffleiste o.ä. eingehangen);
- Fig. 8: zeigt ein Flugzeug gemäß einem Ausführungsbeispiel der Erfindung;
- Fig. 9: zeigt ein Flußdiagramm eines Verfahrens gemäß einem Ausführungsbeispiel der Erfindung.

### DETAILLIERTE BESCHREIBUNG VON AUSFÜHRUNGSBEISPIELEN

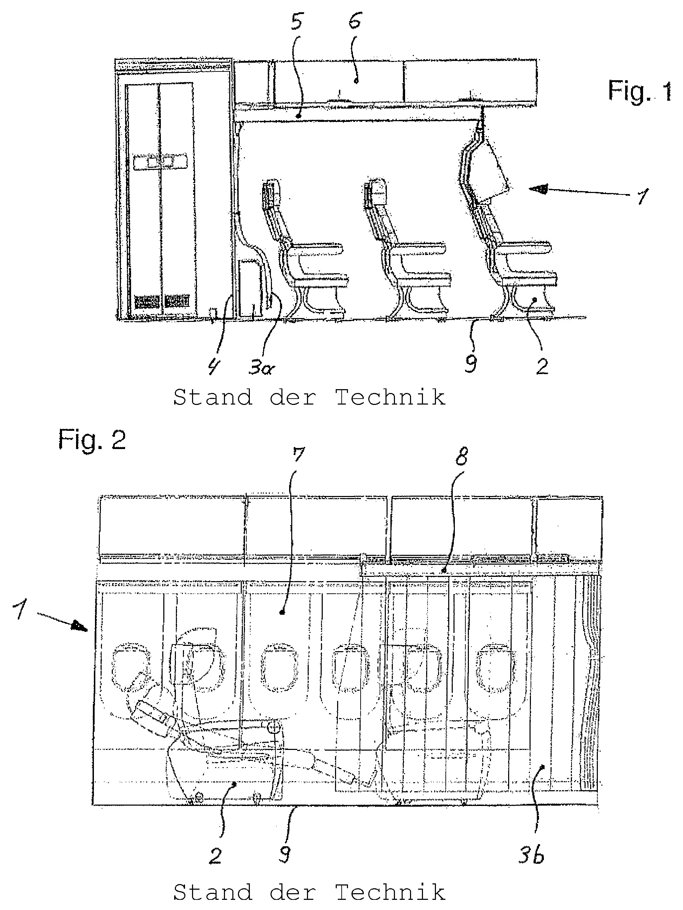

Die Fig. 1 und 2 zeigen bekannte Lösungen zur Separierung einer Passagiersitzgruppe innerhalb einer Passagierkabine eines Flugzeugs. Die Beschreibung dieser Figuren beschränkt sich auf die Erläuterung der Maßnahmen, mit denen ein Sichtschutz bzw. eine Abgrenzung zu dem übrigen Kabinenbereich erfolgt.

Fig. 1 zeigt in einer Seitenansicht einen Ausschnitt einer Passagierkabine 1 eines Flugzeugs mit mehreren, in Reihe angeordneten Passagiersitzen 2, die ein Long Range Curtain Cabin Crew Rest Layout bilden. Zur Abgrenzung oder Separierung eines Kabinenbereichs ist ein Vorhang 3a vorgesehen, der in Fig. 1 in einer geöffneten Stellung zusammengebunden an einer Wand 4 gehalten ist. Der sich bis zu einem Boden 9 der Passagierkabine 1 erstreckende Vorhang 3a ist in einer im Handlauf 5 integrierten Schiene geführt, die oberhalb der Passagiersitze 2 im Bereich eines Hatracks 6 verläuft.

Fig. 2 zeigt einen teilweise durch den Vorhang 3b abgeschirmten VIP-Bereich 7 in der Passagierkabine 1. Der in einer separaten Vorhangschiene 8 geführte Vorhang 3b erstreckt sich ebenfalls bis zu dem Boden 9 der Passagierkabine 1, um eine seitliche Abtrennung gegenüber weiteren Kabinenbereichen der Passagiersitze 2 zu gewährleisten.

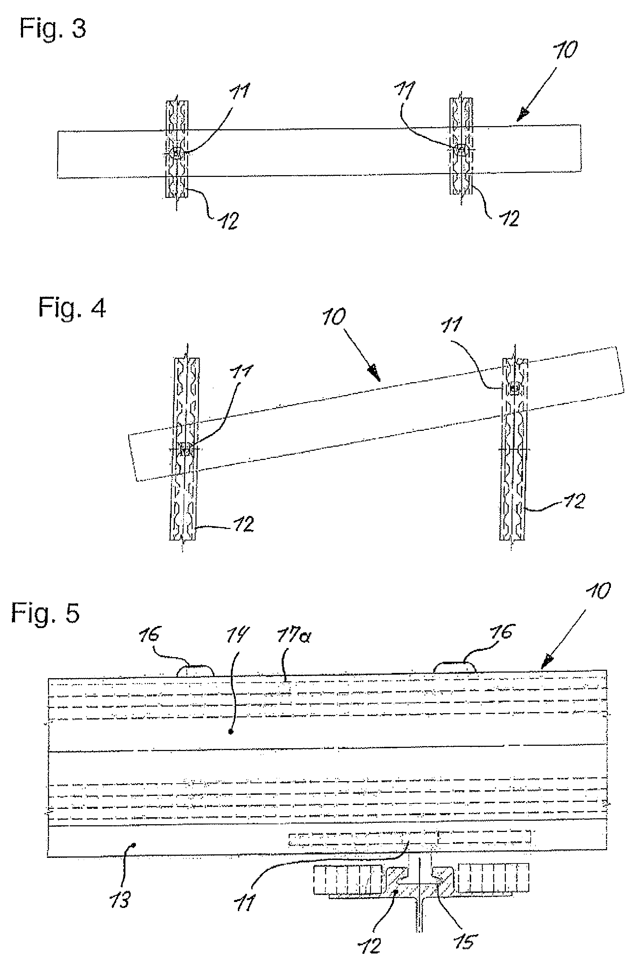

Die Fig. 3 und 4 zeigen die Zuordnung von einem modularen Kabinenelement 10 an Führungsschienen 12. Das eine rechteckförmige kastenartige Struktur aufweisende modulare Kabinenelement 10 ist über jeweils einen Schnellverschluss 11 an parallel verlaufenden Führungsschienen 12 der Passagiersitze 2 befestigt. In Fig. 3 ist das modulare Kabinenelement 10 rechtwinklig zu den Führungsschienen 12 und in Fig. 4 gegenüber den Führungsschienen 12 schräg verlaufend angeordnet. Über die positionsveränderliche Befestigung des modularen Kabinenelementes 10 in Verbindung mit einem integrierten Sichischutzrollo sind variable, bedarfsgerecht abgetrennte Bereiche in der Passagierkabine 1 realisierbar.

Fig. 5 zeigt in einer Ausschnittsvergrößerung Details des modularen Kabinenelementes 10 und dessen positionsveränderliche Befestigung über den Schnellverschluss 11, der auch in einem gewissen Bereich zusätzlich in Y-Richtung verschoben werden kann und einer Führung 15 an der Führungsschiene (Sitzschiene) 12. Das modulare Kabinenelement 10 umfasst ein kastenartiges Behältnis 13, das unter anderem zur Aufnahme einer rotierenden Walze 14 bestimmt ist, auf der in einer Nichtfunktionsstellung ein als Sichtschutzrollo 17a ausgebildeter Sichtschutz platzsparend aufgewickelt ist. Als Maßnahme um das Sichtschutzrollo 17a manuell aus dem Behältnis 13 zu ziehen und in die Funktionsstellung zu bringen, sind Laschen 16 vorgesehen. Das Behältnis 13 bildet bis auf einen zur Durchführung des Sichtschutzrollos 17a bestimmten Längsschlitz ein weitestgehend geschlossenes Hohlkammerprofil, das zusätzlich ein Betätigungsorgan wie Stellmotor einschließlich zugehöriger Stellglieder sowie Zubehörteile aufnehmen kann. Zur Erzielung einer ausreichenden Straffung des Sichtschutzrollos 17a schließt das modulare Kabinenelement 10 eine Rückholfeder ein, die gleichzeitig das Aufwickeln des Sichtschutzrollos 17a auf der Walze 14 vereinfacht.

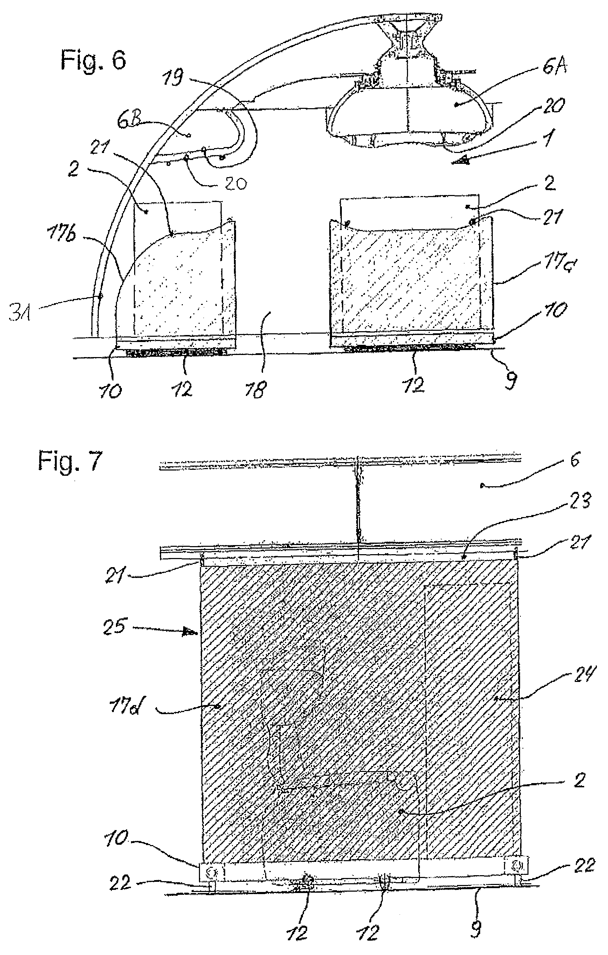

Fig. 6 zeigt jeweils ein teilweise aus modularen Kabinenelementen 10 ausgezogenes, laterales Sichtschutzrollo 17b, sowie ein centerseitiges Sichtschutzrollo 17c in der Passagierkabine 1 eines Flugzeugs, die beispielsweise mit weiteren Sichtschutzrollos abgeschirmte Zonen innerhalb der Passagierkabine 1 bilden. Dabei sind die modularen Kabinenelemente 10 einschließlich der integrierten Sichtschutzrollos 17b, 17c so positioniert, dass ein zwischenliegender Gang 18 seitlich nicht eingeschränkt ist. Das den lateralen Passagiersitzen bzw. sonstigen Bauteilen / Monumenten 2 zugeordnete laterale Sichtschutzrollo 17b ist geometrisch so gestaltet, dass sich dieses in der ausgezogenen Stellung, der Funktionsstellung, dem Center-Hatrack 6A oder der Kontur des lateralen Hatracks 6B bzw. des Sidewall Linings 31 anpasst. Das Sichtschutzrollo 17c in dem Centerbereich bildet eine endseitige Struktur, die einen weitestgehend geschlossenen Übergang zu einem Zwischenraum der PSU-Verkleidung 20 sicherstellt. Übereinstimmend umfassen die Sichtschutzrollos 17b, 17c Befestigungselemente 21, die in korrespondierende Aufnahmen im Bereich der Unterseite des lateralen Hatracks 19 bzw. der PSU-Verkleidung 20 eingreifen, zur Fixierung der Sichtschutzrollos 17b, 17c in der Funktionsstellung.

Fig. 7 zeigt zur Bildung einer abgeschirmten Zone 25 ein vollständig ausgezogenes Sichtschutzrollo 17d, welches dem Passagiersitz 2 seitlich zugeordnet ist und parallel zum Gang verläuft, wobei das modulare Kabinenelement 10 an den Führungsschienen 12 sowie zusätzlich endseitig über Befestigungspunkte 22 an dem Boden 9 abgestützt bzw. befestigt ist. Das Sichtschutzrollo 17d ist mittels Befestigungselementen 21 an einer unterhalb des Hatracks 6 verlaufenden Schiene 23 lösbar befestigt. In dem Sichtschutzrollo 17d ist als Sicherheitselement eine weitestgehend abgedeckte, beispielsweise mittels Reißverschluss zu betätigende Öffnung 24 eingebracht, über Passagiere im Notfall die abgeschirmte Zone 25 verlassen können.

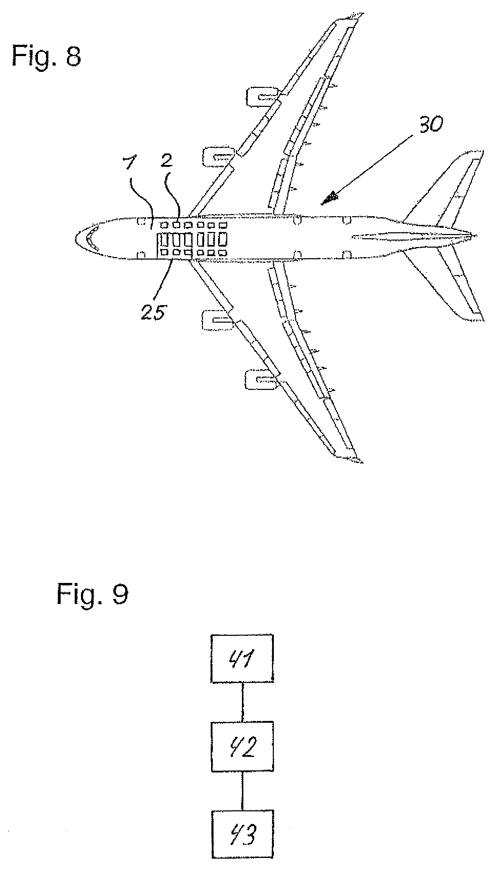

Fig. 8 zeigt ein Flugzeug 30 gemäß einem Ausführungsbeispiel der Erfindung, welches eine oben beschriebene Passagierkabine 1 aufweist, in der zumindest eine abgetrennte Zone 25 vorgesehen ist. In der Fig. 8 sind exemplarisch einzelne Passagiersitze 2 abgebildet sowie eine abgetrennte Zone 25. Alternativ dazu kann die Passagierkabine 1 selbstverständlich auch abweichend dazu angeordnete oder mehrere abgetrennte Zonen 25 einschließen.

Fig. 9 zeigt ein Flussdiagramm eines Verfahrens gemäß einem Ausführungsbeispiel der Erfindung. In Schritt 41 erfolgt die positionsveränderliche Montage des modularen Kabinenelementes an den Führungsschienen des Passagiersitzes. In Schritt 42 erfolgt eine Einstellung des in dem modularen Kabinenelement integrierten Sichtschutzrollos. In Schritt 43 erfolgt eine Arretierung des Sichtschutzrollos an einer Deckenstruktur der Passagierkabine, Hatrackboden, PSU-Panel, Griprail des Hatracks etc.

Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen sind nicht als Einschränkung anzusehen.

**Bezugszeichen**

| | | | |
|---|---|---|---|
| 1 | Passagierkabine | 22 | Befestigungspunkt |
| 2 | Passagiersitz / Monument etc. | 23 | Schiene |
| 3a | Vorhang | 24 | Öffnung |
| 3b | Vorhang | 25 | Zone |
| 4 | Wand | 30 | Flugzeug |
| 5 | Handlauf | 31 | Sidewall-Lining |
| 6A | Center-Hatrack | | |
| 6B | Lateraler Hatrack | | |
| 7 | VIP-Bereich | | |
| 8 | Vorhang schiene | | |
| 9 | Boden | | |
| 10 | Kabinenelement (modulares) | | |
| 11 | Schnellverschluß | | |
| 12 | Führungsschiene | | |
| 13 | Behältnis | | |
| 14 | Walze | | |
| 15 | Führung | | |
| 16 | Lasche | | |
| 17a | Sichtschutzrollo | | |
| 17b | Sichtschutzrollo | | |
| 17c | Sichtschutzrollo | | |
| 17d | Sichtschutzrollo | | |
| 18 | Gang | | |
| 19 | Unterboden des lateralen Hatracks | | |
| 20 | PSU-verkleidung | | |
| 21 | Befestigungselement | | |

## Patentansprüche

1. Einrichtung für eine Passagierkabine (1) eines Flugzeugs, die Einrichtung aufweisend:
zumindest einen Passagiersitz (2);
für den Passagiersitz (2) bestimmte, ortsfest positionierte Führungsschienen;
eine abgegrenzte Zone (25) für den zumindest einen Passagiersitz (2);
wobei zur Realisierung der abgegrenzten Zone (25) als Trennelement zumindest ein flexibles Sichtschutzrollo (17a, 17b, 17c, 17d) vorgesehen ist;
wobei das Sichtschutzrollo (17a, 17b, 17c, 17d) einem positionsveränderlich an den Führungsschienen (12) des Passagiersitzes (2) befestigten modularen Kabinenelement (10) zugeordnet ist;
wobei sich das Sichtschutzrollo (17a, 17b, 17c, 17d) in einer Funktionsstellung zwischen dem modularen Kabinenelement (10) und zumindest einem Element der folgenden Gruppe erstreckt, wobei die Gruppe die Unterseite des Hatracks (19), die PSU-Verkleidung (20), den Deckenverlauf und das Sidewall-Lining (31) umfasst.

2. Einrichtung nach Anspruch 1,
wobei die Passagierkabine (1) mehrere abgegrenzte Zonen (25) einschließt, denen jeweils zumindest ein modulares Kabinenelement (10) mit zugehörigem Sichtschutzrollo (17a,17b,17c,17d) zugeordnet ist.

3. Einrichtung nach Anspruch 1 oder 2,
wobei das modulare Kabinenelement (10) eine beliebige Abgrenzung oder Aufteilung der Passagierkabine (1) in unterschiedliche Passagierbereiche, Passagiersitzgruppen oder Reiseklassen ermöglicht.

4. Einrichtung nach einem der Ansprüche 1 bis 3,
weiterhin aufweisend:
eine manuell oder automatisierte Betätigung des in dem modularen Kabinenelement (10) integrierten Sichtschutzrollos (17a,17b,17c,17d).

5. Einrichtung nach einem der Ansprüche 1 bis 4,
wobei das Sichtschutzrollo (17a,17b,17c,17d) in der Funktionsstellung an einer Deckenstruktur der Passagierkabine (1), der Unterseite des Hatracks (19), oder einer PSU-Verkleidung (20) mittels eines Verriegelungmechanismus fixiert ist.

6. Einrichtung nach einem der Ansprüche 1 bis 5,
wobei das Sichtschutzrollo (17a,17b,17c,17d) als Rollade oder als Jalousie ausgebildet ist.

7. Einrichtung nach einem der Ansprüche 1 bis 6,
weiterhin aufweisend:
ein aus Segeltuch, Leinen, einer Kunststofffolie oder einem Gummi hergestelltes aufrollbares Sichtschutzrollo (17a,17b,17c,17d), wobei als Werkstoff ein schwerentflammbares Material vorgesehen ist.

8. Einrichtung nach einem der Ansprüche 1 bis 7,
wobei das über einen Schnellverschluss (11) an den Führungsschienen (12) des Passagiersitzes (2) befestigte modulare Kabinenelement (10) zum Aufwickeln des Sichtschutzrollos (17a,17b,17c,17d) eine Walze (14) einschließt.

9. Einrichtung nach einem der Ansprüche 1 bis 8,
weiterhin aufweisend:
als Sicherheitselement für die abgegrenzte Zone (25), eine in dem Sichtschutzrollo (17a,17b,17c,17d) integrierte Öffnung 24, die in einem Notfall als Tür benutzt werden kann.

10. Einrichtung nach einem der Ansprüche 1 bis 9,
wobei das modulare Kabinenelement (10) als ein Nachrüstsatz ausgeführt, in eine bestehende Passagierkabine (1) integriert werden kann.

11. Einrichtung nach einem der Ansprüche 1 bis 10,
ausgeführt als Passagierkabine eines Flugzeugs.

12. Flugzeug mit einer Einrichtung für eine Passagierkabine nach einem der Ansprüche 1 bis 10.

13. Verfahren zur Montage und Betätigung einer Einrichtung zur Darstellung einer abgegrenzten Zone (25) in einer Passagierkabine (1) eines Transportmittels, die zumindest einen Passagiersitz (2), ortsfest dem Passagiersitz (2) zugeordnete Führungsschienen (12) sowie ein modulares Kabinenelement (10) mit integriertem Sichtschutzrollo (17a,17b,17c,17d) umfasst, das positionsveränderlich an den Führungsschienen (12) des Passagiersitzes (2) befestigt, das Verfahren aufweisend die folgenden Schritte:
- Montage des modulares Kabinenelements (10) an den Führungsschienen (12) des Passagiersitzes (2);
- Einstellung des Sichtschutzrollos (17a,17b,17c,17d);
- Arretierung des Sichtschutzrollos (17a,17b,17c,17d) an einer Deckenstruktur der Passagierkabine (1), oder der Unterseite des Hatracks (19), oder einer PSU-Verkleidung (20).

## Claims

1. Device for a passenger cabin (1) of an aircraft, the device comprising:
at least one passenger seat (2);
guide rails, positioned so as to be stationary, intended for the passenger seat (2);
a delimited zone (25) for at least one passenger seat (2);
wherein in order to implement the delimited zone (25) at least one flexible privacy screen roller blind (17a, 17b, 17c, 17d) is provided as a partition element;
wherein the privacy screen roller blind (17a, 17b, 17c, 17d) is associated with a modular cabin element (10) which is attached in a positionally variable manner to the guide rails (12) of the passenger seat (2);
wherein the privacy screen roller blind (17a, 17b, 17c, 17d) in a functional position extends between the modular cabin element (10) and at least one element of the following group, wherein the group comprises the underside of the hatrack (19), the PSU panel (20), the ceiling arrangement and the sidewall lining (31).

2. Device according to claim 1,
wherein the passenger cabin (1) includes several delimited zones (25) with which in each case at least one modular cabin element (10) with an accompanying privacy screen roller blind (17a, 17b, 17c, 17d) is associated.

3. Device according to claim 1 or 2,
wherein the modular cabin element (10) makes it possible to achieve any desired delimitation or division of the passenger cabin (1) into different passenger regions, groups of seats for passengers, or travel classes.

4. Device according to one of claims 1 to 3,
further comprising:
manual or automated operation of the privacy screen roller blind (17a, 17b, 17c, 17d) integrated in the modular cabin element (10).

5. Device according to one of claims 1 to 4,
wherein the privacy screen roller blind (17a, 17b, 17c, 17d) in its functional position is affixed to a ceiling structure of the passenger cabin (1), to the underside of the hatrack (19), or to a PSU panel (20) by a locking mechanism.

6. Device according to one of claims 1 to 5,
wherein the privacy screen roller blind (17a, 17b, 17c, 17d) is designed as a roller shutter or a venetian kind.

7. Device according to one of claims 1 to 6,
further comprising:
a rollable privacy screen roller blind (17a, 17b, 17c, 17d) made from canvas, linen, a plastic foil or a rubber, wherein a flame-retardant material is provided as a material.

8. Device according to one of claims 1 to 7,
wherein the modular cabin element (10), which is attached to the guide rails (12) of the passenger seat (2) by way of a quick-release fastener (11), comprises a drum (14) for the purpose of rolling up the privacy screen roller blind (17a, 17b, 17c, 17d).

9. Device according to one of claims 1 to 8,
further comprising:
as a safety element for the delimited zone (25), an opening 24, integrated in the privacy screen roller blind (17a, 17b, 17c, 17d), which opening 24 can be used as a door in the case of an emergency.

10. Device according to one of claims 1 to 9,
wherein the modular cabin element (10), designed as a retrofit kit, can be integrated in an existing passenger cabin (1).

11. Device according to one of claims 1 to 10,
designed as a passenger cabin of an aircraft.

12. Aircraft comprising a device in a passenger cabin according to one of claims 1 to 10.

13. Method for installing and operating a device for providing a delimited zone (25) in a passenger cabin (1) of a means of transport, which device comprises at least one passenger seat (2), associated with stationary guide rails (12) of the passenger seat, as well as a modular cabin element (10) with an integrated privacy screen roller blind (17a, 17b, 17c, 17d) which in a positionally variable manner is attached to the guide rails (12) of the passenger seat (2), the method comprising the following steps:
- installing the modular cabin element (10) to the guide rails (12) of the passenger seat (2);
- adjusting the privacy screen roller blind (17a, 17b, 17c, 17d);
- locking the privacy screen roller blind (17a, 17b, 17c, 17d) to a ceiling structure of the passenger cabin (1), or to the underside of the hatrack (19), or to a PSU panel (20).

## Revendications

1. Moyen pour une cabine passagers (1) d'un avion, le moyen présentant :
au moins un siège passager (2) ;
des rails de guidage (12) à position fixe prévus pour le siège passager (2) ;
une zone (25) délimitée pour l'au moins un siège passager (2) ;
dans lequel au moins un store de protection visuelle souple (17a, 17b, 17c, 17d) est prévu en tant qu'élément de séparation pour la réalisation de la zone (25) délimitée ;
dans lequel le store de protection visuelle (17a, 17b, 17c, 17d) est associé à un élément de cabine (10) modulaire fixé en position variable au niveau des rails de guidage (12) du siège passager (2) ;
dans lequel le store de protection visuelle (17a, 17b, 17c, 17d) s'étend dans une position opérationnelle entre l'élément de cabine (10) modulaire et au moins un élément du groupe suivant, le groupe comprenant la face inférieure du rangement supérieur (19), le revêtement du bloc services passagers (20), le plafond et le revêtement de paroi latérale (31).

2. Moyen selon la revendication 1,
dans lequel la cabine passagers (1) comprend plusieurs zones (25) délimitées, auxquelles est associé respectivement au moins un élément de cabine (10) modulaire comportant le store de protection visuelle (17a, 17b, 17c, 17d) associé.

3. Moyen selon la revendication 1 ou 2,
dans lequel l'élément de cabine (10) modulaire permet une quelconque délimitation ou division de la cabine passagers (1) en différentes zones de passagers, groupes de sièges passagers ou classes de voyage.

4. Moyen selon l'une des revendications 1 à 3,
présentant en outre :
un actionnement manuel ou automatisé du store de protection visuelle (17a, 17b, 17c, 17d) intégré dans l'élément de cabine (10) modulaire.

5. Moyen selon l'une des revendications 1 à 4,
dans lequel le store de protection visuelle (17a, 17b, 17c, 17d) est fixé dans la position opérationnelle au niveau d'une structure de plafond de la cabine passager (1), de la face inférieure du rangement supérieur (19), ou d'un revêtement du bloc services passagers (20) au moyen d'un mécanisme de verrouillage.

6. Moyen selon l'une des revendications 1 à 5,
dans lequel le store de protection visuelle (17a, 17b, 17c, 17d) est réalisé sous forme de volet roulant ou de store vénitien.

7. Moyen selon l'une des revendications 1 à 6,
présentant en outre :
un store de protection visuelle (17a, 17b, 17c, 17d) enroulable réalisé en toile, lin, film plastique ou caoutchouc, la matière prévue étant un matériau difficilement inflammable.

8. Moyen selon l'une des revendications 1 à 7,
dans lequel l'élément de cabine (10) modulaire fixé par l'intermédiaire d'une fermeture rapide (11) au niveau des rails de guidage (12) du siège passager (2) comprend un cylindre (14) pour enrouler le store de protection visuelle (17a, 17b, 17c, 17d).

9. Moyen selon l'une des revendications 1 à 8,
présentant en outre :
en tant qu'élément de sécurité pour la zone (25) délimitée, une ouverture (24) intégrée dans le store de protection visuelle (17a, 17b, 17c, 17d) pouvant être utilisée comme porte en cas d'urgence.

10. Moyen selon l'une des revendications 1 à 9,
dans lequel l'élément de cabine (10) modulaire, réalisé en tant que kit d'extension, pouvant être intégré dans une cabine passagers (1) existante.

11. Moyen selon l'une des revendications 1 à 10,
réalisé en tant que cabine passagers d'un avion.

12. Avion comportant un moyen pour une cabine passagers selon l'une des revendications 1 à 10.

13. Procédé de montage et d'actionnement d'un moyen pour constituer une zone (25) délimitée dans une cabine passagers (1) d'un moyen de transport, qui comprend au moins un siège passager (2), des rails de guidage (12) à position fixe associés au siège passager (2) ainsi qu'un élément de cabine (10) modulaire avec store de protection visuelle (17a, 17b, 17c, 17d) intégré qui est fixé en position variable au niveau des rails de guidage (12) du siège passager (2), le procédé présentant les étapes suivantes :
- montage de l'élément de cabine (10) modulaire au niveau des rails de guidage (12) du siège passager (2) ;
- réglage du store de protection visuelle (17a, 17b, 17c, 17d) ;
- blocage du store de protection visuelle (17a, 17b, 17c, 17d) au niveau d'une structure de plafond de la cabine passagers (1), ou de la partie inférieure du rangement supérieur (19), ou d'un revêtement du bloc services passagers (20).
